# EUROPÄISCHE PATENTSCHRIFT

(11) **EP 3 512 649 B1**
(45) Veröffentlichungstag und Bekanntmachung des Hinweises auf die Patenterteilung: **06.09.2023**
(21) Anmeldenummer: 17757675.8
(22) Anmeldetag: 21.07.2017
(51) Int. Cl.: B21J 15/02, F16H 41/28, B21K 25/00

(54) **VERFAHREN ZUR AUSBILDUNG EINES NIETKOPFES AUS EINEM SPRÖDEN METALLISCHEN WERKSTOFF**
METHOD FOR FORMING A RIVET HEAD FROM A BRITTLE METALLIC MATERIAL
PROCÉDÉ DE FORMATION D'UNE TÊTE DE RIVET À PARTIR D'UN MATÉRIAU MÉTALLIQUE CASSANT

(30) Priorität: 15.09.2016 DE 102016217581
(43) Veröffentlichungstag der Anmeldung: 24.07.2019
(73) Patentinhaber: Schaeffler Technologies AG & Co. KG, 91074 Herzogenaurach (DE)
(72) Erfinder: WU, Feng, 200336, Shanghai (CN); ECKERT, Dieter, 90765 Fürth (DE); LEOBOLD, Thierry, 67360 Woerth (FR)
(86) Internationale Anmeldenummer: PCT/DE2017/100609
(87) Internationale Veröffentlichungsnummer: WO 2018/050147

(56) Entgegenhaltungen:
- DE-A1- 4 339 249
- DE-A1-102008 011 113
- GB-A- 575 556
- JP-A- S59 166 330

## Beschreibung

Die Erfindung betrifft Verfahren zur Ausbildung eines Nietkopfes eines Niets aus einem spröden metallischen Werkstoff, sowie die Verwendung des erfindungsgemäßen Verfahrens zur Ausbildung eines Nietkopfes, der einen Gehäusedeckel auf einem Gehäuse eines Entkopplungsspanners für einen Riemen-Starter-Generator formschlüssig fixiert.

Bekannt ist, dass Gehäuse von Kraftfahrzeuggetrieben oder Gehäuse von Bauteilen in Kraftfahrzeuggetrieben aus Leichtmetall-Gusswerkstoffen hergestellt werden. Zum Fügen zweier Bauteile werden die Bauteile über Schraubverbindungen miteinander verbunden. Im Zuge der Prozessoptimierung und der Bauteiloptimierung ist eine alternative Technik zum Fügen zweier Bauteil aus Leichtmetall-Gusswerkstoffen vorgesehen.

Es ist die Aufgabe der Erfindung, ein Verfahren zur Ausbildung eines Nietkopfes aus einem spröden metallischen Werkstoff bereitzustellen, der eine einfache und verlässliche formschlüssige Fixierung zweier Bauteile ermöglicht und bei dem die Gefahr von Rissbildungen bei der Ausformung des Nietkopfes reduziert ist.

Die Lösung der Aufgabe erfolgt erfindungsgemäß durch eine Verfahren mit den Merkmalen des Anspruchs 1, sowie die Verwendung des erfindungsgemäßen Verfahrens mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Gemäß Anspruch 1 wird zur Ausbildung des Nietkopfes ein um die Längsachse rotierender Stempel in Richtung der Längsachse von einer Ausgangsposition in eine Kontaktposition verschoben bzw. verfahren. In der Kontaktposition hat der Stempel Kontakt mit einer Nietstirnseite der Niet. Über den Stempel wird ein Anpressdruck auf die Nietstirnseite des Niets ausgeübt. Durch den Anpressdruck und die Rotation des Stempels wird eine Reibkraft auf die Nietstirnseite ausgeübt, die die Nietstirnseite bzw. einen die Nietstirnseite aufweisenden Nietendabschnitt der Niet erwärmt. Durch die Erwärmung der Nietstirnseite und/oder des Nietendabschnitts wird die Bruchdehnung des spröden metallischen Werkstoffs der Niet im Nietendabschnitt erhöht. Im Anschluss daran wird ein zweiter Anpressdruck des um die Stempellängsachse rotierenden Stempels auf die Nietstirnseite ausgeübt und der Stempel wird in Richtung der Stempellängsachse in eine Endposition verschoben bzw. verfahren. Durch das Verschieben des Stempels in die Endposition wird der Nietendabschnitt der Niet gestaucht, wobei der Umfang des Nietendabschnitts aufgeweitet und der Nietkopf und somit der Nietkopf ausgebildet wird. Durch die Erhöhung der Bruchdehnung des spröden metallischen Werkstoffs im Nietendabschnitt kann der Nietendabschnitt gestaucht werden, wobei die Gefahr der Rissbildung bei der Ausbildung des Nietkopfes gegenüber einer Kaltverformung des Nietkopfes reduziert werden kann.

Unter einem spröden metallischen Werkstoff wird vorzugsweise ein Leichtmetall-Gusswerkstoff verstanden. Bevorzugt weist der spröde metallische Werkstoff eine Bruchdehnung ≤ 1% auf. Ganz besonders bevorzugt umfasst der spröde metallische Werkstoff die Legierung EN AC-AlSi9Cu3.

Gemäß Anspruch 1 ist der Niet zylinderförmig ausgebildet und weist eine Nietlängsachse auf, und die Nietstirnseite des Niets ist in einer Ebene rechtwinkelig zur Nietlängsachse ausgebildet, wobei der Stempel in einer Ebene senkrecht zur Stempellängsachse eine Stempelstirnseite aufweist und der Stempel mit seiner Stempellängsachse koaxial zur Nietlängsachse in Richtung der Stempellängsachse verschoben wird. Auf diese Weise sind die Stempelstirnseite und die Nietstirnseite im Wesentlichen zueinander parallel angeordnet. Gemäß Anspruch 1 weist die Stempelstirnseite eine Fläche auf, die größer als die Fläche der Nietstirnseite ist. Somit kann der um die Stempellängsachse rotierende Stempel in der Kontaktposition bzw. beim Aufbringen des ersten Anpressdrucks die Reibwirkung gleichmäßig auf die Nietstirnseite übertragen, wodurch eine im Wesentlichen gleichmäßige Erwärmung des Nietendabschnitts erzielt werden kann.

In einer bevorzugten Weiterbildung der Erfindung ist vorgesehen, dass der Stempel mit einer Rotationsgeschwindigkeit vᵣ zwischen 6.000 U/min ≤ vᵣ ≤ 21.000 U/min, vorzugsweise zwischen 7.000 U/min ≤ vᵣ ≤ 15.000 U/min und ganz bevorzugt zwischen 7.000 U/min ≤ vᵣ ≤ 9.000 U/min um die Stempellängsachse rotiert wird. Auf diese Weise kann in Abhängigkeit der Rotationsgeschwindigkeit gesteuert werden, wie schnell die Nietstirnseite und/oder der Nietendabschnitt erwärmt wird.

Gemäß einer vorteilhaften Weiterbildung der Erfindung ist vorgesehen, dass der erste Anpressdruck p_{cp1} mit einem Druck von zwischen 0,5bar ≤ p_{cp1} ≤ 2bar, vorzugsweise zwischen 1bar ≤ p_{cp1} ≤ 1,5bar, auf die Nietstirnseite ausgeübt wird. Auf diese Weise wird eine weitere Möglichkeit bereitgestellt, um die Erwärmung der Nietstirnseite und/oder des Nietendabschnitts durch die auf die Nietstirnseite wirkende Reibkraft des um die Stempellängsachse rotierenden Stempels zu regeln bzw. zu steuern.

Eine vorteilhafte Weiterbildung der Erfindung liegt darin, dass die Reibdauer t_{f} zwischen 0,1s ≤ t_{f} ≤ 2s, vorzugsweise zwischen 0,1s ≤ t_{f} ≤ 1 Sek, und ganz bevorzugt zwischen 0,5s ≤ t_{f} ≤ 1s beträgt. Auf diese Weise kann über die Einstellung der Reibdauer die Erwärmung des Nietendabschnitts gesteuert werden.

In einer vorteilhaften Weiterbildung der Erfindung ist vorgesehen, dass der zweite Anpressdruck p_{cp2} mit einem Druck zwischen 0,5bar ≤ p_{cp2} ≤ 2,5bar, vorzugsweise zwischen 1bar ≤ p_{cp2} ≤ 2bar auf die Nietstirnseite ausgeübt wird. Erfindungsgemäß ist der zweite Anpressdruck etwas höher als der erste Anpressdruck. Dies ist in der Regel dadurch begründet, dass während des zweiten Anpressdrucks der Stempel in die Endposition verschoben wird, wodurch eine Stauchung des Nietendabschnitts des Niets erfolgt. Durch die Stauchung des Nietendabschnitts liegt ein Widerstand vor, der dem zweiten Anpressdruck entgegenwirkt.

Eine vorteilhafte Weiterbildung der Erfindung liegt darin, dass der zweite Anpressdruck für eine Verformungsdauer tᵤ zwischen 1s ≤ tᵤ ≤ 3s, vorzugsweise zwischen 1s ≤ tᵤ ≤ 2s auf die Nietstirnseite ausgeübt wird. Weiter ist vorzugsweise vorgesehen, dass der Stempel kontinuierlich über den Zeitraum der Verformungsdauer in Richtung der Stempellängsachse in die Endposition verschoben wird. Auf diese Weise wird der Stempel vorzugsweise über die Verformungsdauer von der Kontaktposition in die Endposition verschoben, wodurch der Nietendabschnitt kontinuierlich gestaucht und der Nietkopf ausgebildet wird.

Nach Erreichen der Endposition wird der Stempel in die Ausgangsposition verschoben bzw. verfahren. Auf diese Weise wird das Verfahren zur Ausbildung des Nietkopfes beendet, so dass ein neuer Verfahrensschritt eingeleitet werden kann. Eine bevorzugte Weiterbildung der Erfindung liegt darin, dass der Stempel nach Erreichen der Endposition und nach einer Verzögerungszeit t_{d} zwischen 0,2s ≤ t_{d} ≤ 1,5s, vorzugsweise zwischen 0,2s ≤ t_{d} ≤ 1,0s und besonders bevorzugt zwischen 0,2s ≤ t_{d} ≤ 0,7s in die Ausgangsposition verschoben wird. Während der Verzögerungszeit kann überprüft werden, welchen Weg der Stempel von der Kontaktposition bis zur Endposition zurückgelegt hat. Der Weg des Stempels ist ein Indikator dafür, um welchen Betrag der Niet bzw. Nietendabschnitt gestaucht wurde und um welchen Betrag der Umfang des Nietendabschnitt zugenommen hat. Somit kann ein Rückschluss auf die Größe des Nietkopfes gewonnen werden.

Erfindungsgemäß ist zudem die Verwendung eines Verfahrens zur Ausbildung eines Nietkopfes eines Niets aus einem spröden metallischen Werkstoff vorgesehen, wobei der Nietkopf einen Gehäusedeckel auf einem Gehäuse eines Entkopplungsspanners für einen Riemen-Starter Generator formschlüssig fixiert, umfassend die im Anspruch 1 definierten Schritte.

Somit wird die Verwendung eines Verfahrens bereitgestellt, bei dem Gehäusedeckel auf einem Gehäuse eines Entkopplungsspanners für einen Riemen-Starter-Generator in einfacher Weise formschlüssig fixiert werden kann.

In einer vorteilhaften Weiterbildung der Erfindung ist vorgesehen, dass der Niet einen Durchmesser d_{N} zwischen 3mm ≤ d_{N} ≤ 8mm, vorzugsweise zwischen 4,5 mm ≤ d_{N} ≤ 6mm, aufweist.

Eine vorteilhafte Weiterbildung der Erfindung liegt darin, dass der Gehäusedeckel eine Nietdurchstecköffnung aufweist, und die Nietdurchstecköffnung einen Innendurchmesser dazwischen 4 mm ≤ d_{O} ≤ 9mm, vorzugsweise zwischen 5 mm ≤ d_{O} ≤ 7mm, aufweist und der Niet durch die Nietdurchstecköffnung geführt ist.

Gemäß einer bevorzugten Weiterbildung der Erfindung ist vorgesehen, dass ein Ringraum aᵣᵣ zwischen der Niet und Nietdurchstecköffnung umlaufend zwischen 0,1 mm ≤ aᵣᵣ ≤ 0,8 mm, vorzugsweise zwischen 0,1 mm ≤ aᵣᵣ ≤ 0,3 mm, ausgebildet ist. Nachfolgend wird die Erfindung unter Bezugnahme auf die anliegenden Zeichnungen anhand bevorzugter Ausführungsbeispiele exemplarisch erläutert.

Es zeigen:
Fig. 1a - 1c eine schematische graphische Darstellung des Verfahrens zur Ausbildung des Nietkopfes, gemäß einem bevorzugten Ausführungsbeispiel der Erfindung,
Fig. 2 einen ersten Schnitt durch einen Nietkopf, gemäß dem bevorzugten Ausführungsbeispiel der Erfindung,
Fig. 3 eine Aufsicht eines einen Gehäusedeckel eines Gehäuses fixierenden Nietkopfes, gemäß einem bevorzugten Ausführungsbeispiel der Erfindung,
Fig. 4 einen zweiten Schnitt durch einen Nietkopf, gemäß dem bevorzugten Ausführungsbeispiel der Erfindung.

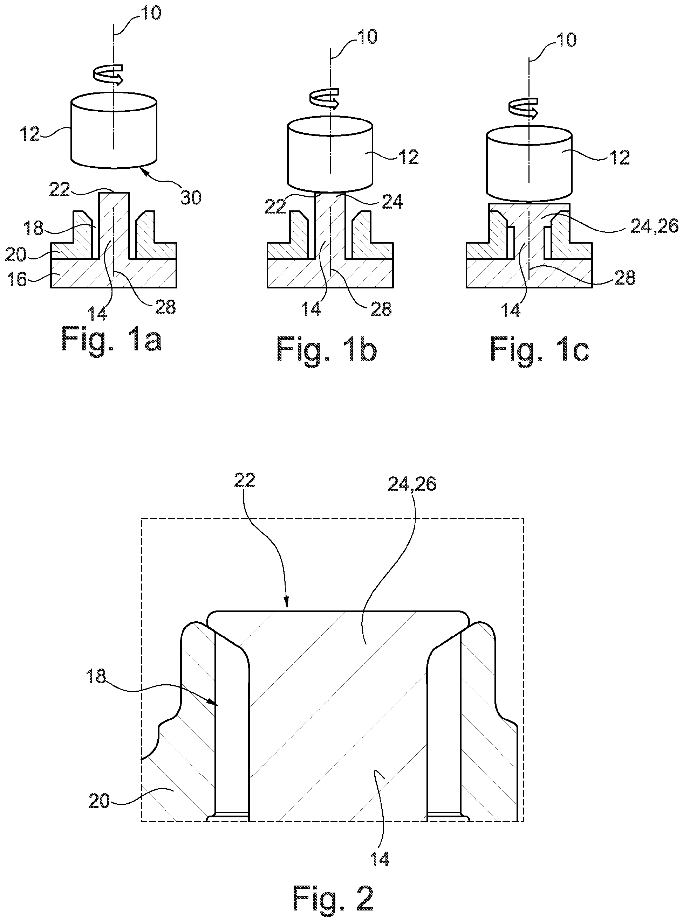

In Fig. 1a bis 1c ist der Ablauf eines Verfahrens zur Ausbildung eines Nietkopfes aus einem spröden metallischen Werkstoff graphisch dargestellt gezeigt. In Fig. 1a befindet sich ein um eine Stempellängsachse 10 rotierender Stempel 12 im Abstand zu einem Niet 14 in einer Ausgangsposition. Der Niet 14 ist an einem Gehäuse 16 eines Entkopplungsspanners angeordnet. Der Niet 14 ist durch eine Nietdurchstecköffnung 18 in einem Gehäusedeckel 20 geführt.

In. Fig. 1b ist der um die Stempellängsachse 10 rotierende Stempel 12 von der Ausgangsposition in einer Richtung entlang der Stempellängsachse 10 in eine Kontaktposition überführt worden. In der Kontaktposition steht der Stempel 12 in Kontakt mit einer Nietstirnseite 22 des Niets 14. Über den Stempel 12 wird ein erster Anpressdruck auf die Nietstirnseite 22 des Niets 14 ausgeübt. Durch den ersten Anpressdruck und die Rotation des Stempels 12 um die Stempellängsachse 10 wird eine Reibkraft auf die Nietstirnseite 22 ausgeübt, die die Nietstirnseite 22 bzw. einen die Nietstirnseite 22 aufweisenden Nietendabschnitt 24 der Niet 14 erwärmt. Durch die Erwärmung der Nietstirnseite 22 und/oder des Nietendabschnitts 24 wird die Bruchdehnung des spröden metallischen Gusswerkstoffs der Niet im Nietendabschnitt 24 erhöht.

In Fig. 1c ist ein zweiter Anpressdruck des um die Stempellängsachse 10 rotierenden Stempels 12 auf die Nietstirnseite 22 ausgeübt und der Stempel 12 ist in Richtung der Stempellängsachse 10 in eine Endposition verschoben worden. Durch das Verschieben des Stempels 12 in die Endposition wird der Nietendabschnitt 24 der Niet 14 gestaucht, wobei der Umfang des Nietendabschnitts 24 aufgeweitet bzw. vergrößert und der Nietkopf 26 ausgebildet wird. Durch die Erwärmung des Nietendabschnitts 24 und der damit verbundenen Erhöhung der Bruchdehnung des spröden metallischen Gusswerkstoffs, kann die Gefahr einer Rissbildung bei der Ausformung des Nietkopfes 26 reduziert werden.

Aus Fig. 1a bis 1c ist zudem ersichtlich, dass der Niet 14 eine Nietlängsachse 28 aufweist und die Nietstirnseite 22 in einer Ebene senkrecht zur Nietlängsachse 28 ausgebildet ist. Der Stempel 12 weist in einer Ebene senkrecht zur Stempellängsrichtung 10 eine Stempelstirnseite 30 auf. Der Stempel 12 wird koaxial zur Nietlängsachse 28 in Richtung der Stempellängsachse zwischen der Anfangsposition über die Kontaktposition bis zur Endposition verschoben. Auf diese Weise kann die Reibkraft vollflächig auf die Nietstirnseite 22 übertragen werden, wodurch eine im Wesentlichen gleichmäßige Erwärmung des Nietendabschnitts 24 erzielt werden kann.

Fig. 2 zeigt einen ersten Schnitt durch den Niet 14 mit einem Nietkopf 26 der den Gehäusedeckel 20 fixiert. Der Niet 14 ist durch die Nietdurchstecköffnung 18 des Gehäusedeckels 20 geführt und im Anschluss daran ist der Nietkopf 26 ausgebildet worden. Der Niet 14 umfasst die Legierung EN AC-AlSi9Cu3 und hat im unverformten Zustand einen Außendurchmesser von 5,1 mm. Die Nietdurchstecköffnung 18 hat einen Innendurchmesser von 5,3 mm. Der Ringraum zwischen der Niet 14 und der Nietdurchstecköffnung 18 beträgt umlaufend 0,1 mm. Zum Erwärmen und anschließenden Stauchen der Niet 14 bzw. des Nietendabschnitts 24 und zur Ausbildung des Nietkopfes 26 wurde ein erster Anpressdruck von 1 bar für eine Reibzeit von 0,2s über den mit einer Rotationsgeschwindigkeit von 8.500 U/min um die Stempellängsachse rotierenden Stempel (nicht dargestellt) auf die Nietstirnseite 22 aufgebracht. Im Anschluss daran wurde der Nietendabschnitt unter Beibehaltung der Rotationsgeschwindigkeit des Stempels mit einem zweiten Anpressdruck von 1,5 bar über eine Verformungszeit von 1,5s von der Kontaktposition in die Endposition verschoben, wodurch der Nietendabschnitt 24 gestaucht und der Umfang des Nietendabschnitts 24 vergrößert wurde, so dass dieser größer als der Innendurchmesser der Nietdurchstecköffnung 18 ist und den Gehäusedeckel 20 formschlüssig fixiert.

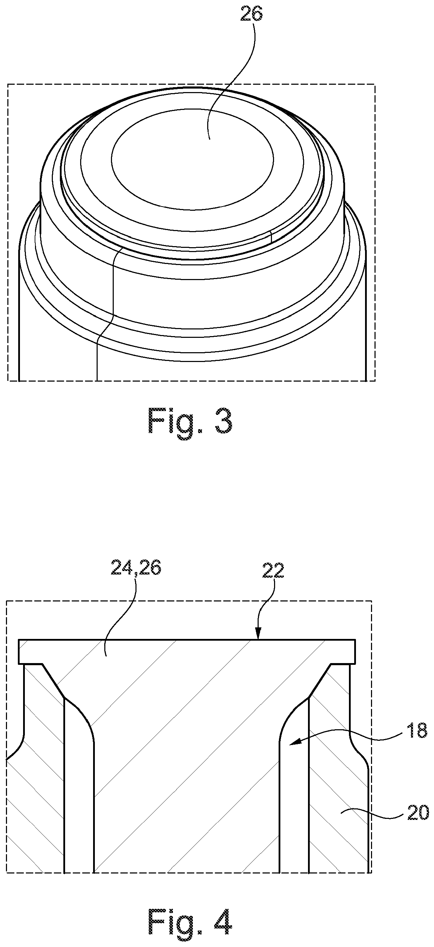

In Fig. 3 ist eine Ansicht des Nietkopfes 26 für den in Fig. 2 im Schnitt dargestellten Nietkopf 26 gezeigt. Auf der Nietstirnseite 22 sind kreisringförmig ausgebildete Riefen zu sehen, die von der auf die Nietstirnseite 22 übertragenen Reibung des um die Stempellängsachse rotierenden Stempels (nicht gezeigt) herrühren.

Fig. 4 zeigt einen zweiten Schnitt durch einen Niet 14. Zur Ausbildung des Nietkopfes 26 wurde ein erster Anpressdruck von 1,3 bar für eine Reibzeit von 0,72s über den mit einer Rotationsgeschwindigkeit von 8.500 U/min um die Stempellängsachse rotierenden Stempel (nicht dargestellt) auf die Nietstirnseite 22 aufgebracht. Im Anschluss daran wurde der Nietendabschnitt 24 unter Beibehaltung der Rotationsgeschwindigkeit des Stempels mit einem zweiten Anpressdruck von 1,5 bar über eine Verformungszeit von 1,5s von der Kontaktposition in die Endposition verschoben, wodurch der Nietendabschnitt 24 gestaucht und der Umfangs des Nietendabschnitts 24 vergrößert wurde, so dass dieser größer als der Innendurchmesser der Nietdurchstecköffnung 18 ist und den Gehäusedeckel 20 formschlüssig fixiert.

Im Unterschied zu dem in Fig. 2 gezeigten Nietkopf 26 wurde der in Fig. 4 gezeigte Nietkopf 26 mit einem höheren ersten Anpressdruck und einer längeren Reibzeit ausgebildet. Durch den höheren ersten Anpressdruck und die längere Reibzeit kann eine höhere Duktilität zur Ausformung des Nietkopfes 26 erzielt werden.

### Bezugszeichenliste

- 10: Stempellängsachse
- 12: Stempel
- 14: Niet
- 16: Gehäuse
- 18: Nietdurchstecköffnung
- 20: Gehäusedeckel
- 22: Nietstirnseite
- 24: Nietendabschnitt
- 26: Nietkopf
- 28: Nietlängsachse
- 30: Stempelstirnseite

## Patentansprüche

1. Verfahren zur Ausbildung eines Nietkopfes (26) eines Niets (14) aus einem spröden metallischen Werkstoff mit einer Bruchdehnung ≤ 1%, wobei der Niet (14) zylinderförmig ausgebildet ist und eine Nietlängsachse (28) aufweist, umfassend die Schritte:
Verschieben eines um eine Stempellängsachse (10) rotierenden Stempels (12) in Richtung der Stempellängsachse (10) von einer Ausgangsposition in eine Kontaktposition, wobei der Stempel (12) mit seiner Stempellängsachse (10) parallel und/oder koaxial zur Nietlängsachse (28) in Richtung der Stempellängsachse (10) verschoben wird, wobei der Stempel (12) in einer Ebene senkrecht zur Stempellängsachse (10) eine Stempelstirnseite (30) aufweist, wobei in der Kontaktposition die Stempelstirnseite (30) in Kontakt mit einer Nietstirnseite (22) der Niet (14) ist, wobei die Nietstirnseite (22) der Niet (14) in einer Ebene rechtwinkelig zu einer Nietlängsachse (28) ausgebildet ist, wobei die Stempelstirnseite (30) eine Fläche aufweist, die größer ist als eine Fläche der Nietstirnseite (22);
Aufbringen eines ersten Anpressdrucks über den um die Stempellängsachse (10) rotierenden Stempel (12) auf die Nietstirnseite (22) für eine Reibdauer;
Aufbringen eines zweiten Anpressdrucks über den um die Stempellängsachse (10) rotierenden Stempel (12) auf die Nietstirnseite (22), wobei der zweite Anpressdruck größer ist als der erste Anpressdruck; und Verschieben des rotierenden Stempels (12) in Richtung der Stempellängsachse (10) in eine Endposition, wobei durch das Verschieben des Stempels (12) von der Kontaktposition in die Endposition ein die Nietstirnseite (22) aufweisender Nietendabschnitt (24) gestaucht und der Umfang des Nietendabschnitts (24) vergrößert wird.

2. Verfahren nach Anspruch 1, **dadurch gekennzeichnet, dass** der Niet (14) aus der Legierung EN AC-AlSi9Cu3 gebildet wird

3. Verfahren nach Anspruch 1 oder 2, **dadurch gekennzeichnet, dass** der Stempel (12) mit einer Rotationsgeschwindigkeit vᵣ zwischen 6.000 U/min ≤ vᵣ ≤ 21.000 U/min, vorzugsweise zwischen 7.000 U/min ≤ vᵣ ≤ 15.000 U/min und ganz bevorzugt zwischen 7.000 U/min ≤ vᵣ ≤ 9.000 U/min um die Stempellängsachse (10) rotiert wird.

4. Verfahren nach einem der Ansprüche 1 bis 3, **dadurch gekennzeichnet, dass** der erste Anpressdruck p_{cp1} mit einem Druck von zwischen 0,5bar ≤ p_{cp1} ≤ 2bar, vorzugsweise zwischen 1bar ≤ p_{cp1} ≤ 1,5bar, auf die Nietstirnseite (22) ausgeübt wird.

5. Verfahren nach einem der Ansprüche 1 bis 4, **dadurch gekennzeichnet, dass** die Reibdauer t_{f} zwischen 0,1s ≤ t_{f} ≤ 2s, vorzugsweise zwischen 0,1s ≤ t_{f} ≤ 1 Sek, und ganz bevorzugt zwischen 0,5s ≤ t_{f} ≤ 1s beträgt.

6. Verfahren nach einem der Ansprüche 1 bis 5, **dadurch gekennzeichnet, dass** der zweite Anpressdruck p_{cp2} mit einem Druck zwischen 0,5bar ≤ p_{cp2} ≤ 2,5bar, vorzugsweise zwischen 1bar ≤ p_{cp2} ≤ 2bar auf die Nietstirnseite (22) ausgeübt wird.

7. Verfahren nach einem der Ansprüche 1 bis 6, **dadurch gekennzeichnet, dass** der zweite Anpressdruck für eine Verformungsdauer tᵤ zwischen 1s ≤ tᵤ ≤ 3s, vorzugsweise zwischen 1s ≤ tᵤ ≤ 2s auf die Nietstirnseite (22) ausgeübt wird.

8. Verfahren nach einem der vorhergehenden Ansprüche, **dadurch gekennzeichnet, dass** der Stempel (12) nach Erreichen der Endposition und nach einer Verzögerungszeit t_{d} zwischen 0,2s ≤ t_{d} ≤ 1,5s, vorzugsweise zwischen 0,2s ≤ t_{d} ≤ 1,0s und besonders bevorzugt zwischen 0,2s ≤ t_{d} ≤ 0,7s in die Ausgangsposition verschoben wird.

9. Verwendung eines Verfahrens nach einem der vorhergehenden Ansprüche zur Ausbildung eines Nietkopfes (26) eines Niets (14), der einen Gehäusedeckel (20) auf einem Gehäuse (16) eines Entkopplungsspanners für einen Riemen-Start-Generator formschlüssig fixiert.

## Claims

1. A method for forming a rivet head (26) of a rivet (14) from a brittle metallic material with an elongation at break ≤ 1%, wherein the rivet (14) is cylindrical and has a rivet longitudinal axis (28), comprising the steps of:
moving a die (12) that rotates about a die longitudinal axis (10) in the direction of the die longitudinal axis (10) from a starting position into a contact position, wherein the die (12) is moved with its die longitudinal axis (10) parallel and/or coaxial to the rivet longitudinal axis (28) in the direction of the die longitudinal axis (10), wherein the die (12) has a die end face (30) in a plane perpendicular to the die longitudinal axis (10), wherein the die end face (30) is in contact with a rivet end face (22) of the rivet (14) in the contact position, wherein the rivet end face (22) of the rivet (14) is formed in a plane at right angles to a rivet longitudinal axis (28), wherein the die end face (30) has an area that is larger than an area of the rivet end face (22);
applying a first pressing pressure to the rivet end face (22) by way of the die (12) rotating about the die longitudinal axis (10) for a friction duration;
applying a second pressing pressure to the rivet end face (22) by way of the die (12) rotating about the die longitudinal axis (10), wherein the second pressing pressure is greater than the first pressing pressure; and moving the rotating die (12) in the direction of the die longitudinal axis (10) into an end position, wherein, by moving the die (12) from the contact position into the end position, a rivet end portion (24) having the rivet end face (22) is compressed and the circumference of the rivet end portion (24) is increased.

2. The method according to claim 1, **characterised in that** the rivet (14) is formed from the alloy EN AC-AlSi9Cu3.

3. The method according to claim 1 or 2, **characterised in that** the die (12) rotates at a rotational speed vᵣ between 6,000 rpm ≤ vᵣ ≤ 21,000 rpm, preferably between 7,000 rpm ≤ vᵣ ≤ 15,000 rpm and particularly preferably between 7,000 rpm ≤ vᵣ ≤ 9,000 rpm about the die longitudinal axis (10).

4. The method according to any one of claims 1 to 3, **characterised in that** the first pressing pressure p_{cp1} is exerted on the rivet end face (22) with a pressure of between 0.5 bar ≤ p_{cp1} ≤ 2 bar, preferably between 1 bar ≤ p_{cp1} ≤ 1.5 bar.

5. The method according to any one of claims 1 to 4, **characterised in that** the friction duration t_{f} is between 0.1 s ≤ t_{f} ≤ 2 s, preferably between 0.1s ≤ t_{f} ≤ 1 s, and particularly preferably between 0.5 s ≤ t_{f} ≤ 1 s.

6. The method according to any one of claims 1 to 5 **characterised in that** the second pressing pressure p_{cp2} is exerted on the rivet end face (22) with a pressure of between 0.5 bar ≤ p_{cp2} ≤ 2.5 bar, preferably between 1 bar ≤ p_{cp2} ≤ 2 bar.

7. The method according to any one of claims 1 to 6, **characterised in that** the second pressing pressure is exerted on the rivet end face (22) for a deformation duration tᵤ between 1 s ≤ tᵤ ≤ 3 s, preferably between 1 s ≤ tᵤ ≤ 2 s.

8. The method according to any one of the preceding claims, **characterised in that**, after reaching the end position and after a delay t_{d} between 0.2 s ≤ t_{d} ≤ 1.5 s, preferably between 0.2 s ≤ t_{d} ≤ 1.0 s and particularly preferably between 0.2 s ≤ t_{d} ≤ 0.7 s, the die (12) is moved to the starting position.

9. A use of a method according to any one of the preceding claims for forming a rivet head (26) of a rivet (14) which, in a form-fitting manner, fixes a housing cover (20) on a housing (16) of a decoupling tensioner for a belt starter generator.

## Revendications

1. Procédé de formation d'une tête de rivet (26) d'un rivet (14) à partir d'un matériau métallique cassant avec un allongement à la rupture de ≤ 1 %, le rivet (14) étant conçu cylindrique et présentant un axe longitudinal de rivet (28), comprenant les étapes suivantes :
déplacement d'un poinçon (12) tournant autour d'un axe longitudinal de poinçon (10) dans la direction de l'axe longitudinal de poinçon (10) d'une position initiale à une position de contact, le poinçon (12) avec son axe longitudinal de poinçon (10) étant déplacé parallèlement et/ou coaxialement à l'axe longitudinal de rivet (28) en direction de l'axe longitudinal de poinçon (10), le poinçon (12) présentant une face avant de poinçon (30) dans un plan perpendiculaire à l'axe longitudinal de poinçon (10), la face avant de poinçon (30) étant en contact avec une face avant de rivet (22) du rivet (14) dans la position de contact, la face avant de rivet (22) du rivet (14) étant formée dans un plan perpendiculaire à un axe longitudinal de rivet (28), la face avant de poinçon (30) ayant une surface plus grande qu'une surface de la face avant de rivet (22) ;
application d'une première pression de contact par le biais du poinçon (12) tournant autour de l'axe longitudinal de poinçon (10) sur la face avant de rivet (22) pendant un temps de frottement ;
application d'une seconde pression de contact sur la face avant de rivet (22) par le biais du poinçon (12) tournant autour de l'axe longitudinal de poinçon (10), la seconde pression de contact étant supérieure à la première pression de contact ; et déplacement du poinçon (12) rotatif dans la direction de l'axe longitudinal de poinçon (10) vers une position finale, le déplacement du poinçon (12) de la position de contact à la position finale comprimant une section d'extrémité de rivet (24) présentant la face avant de rivet (22) et la circonférence de la section d'extrémité de rivet (24) étant augmentée.

2. Procédé selon la revendication 1, **caractérisé en ce que** le rivet (14) est formé de l'alliage EN AC-AlSi9Cu3.

3. Procédé selon la revendication 1 ou 2, **caractérisé en ce que** le poinçon (12) tourne à une vitesse de rotation vᵣ comprise entre 6 000 tr/min ≤ vᵣ ≤ 21 000 tr/min, de préférence entre 7 000 tr/min ≤ vᵣ ≤ 15 000 tr/min et très préférablement entre 7 000 tr/min ≤ vᵣ ≤ 9000 tr/min autour de l'axe longitudinal de poinçon (10).

4. Procédé selon l'une des revendications 1 à 3, **caractérisé en ce que** la première pression de contact p_{cp1} est exercée sur la face avant de rivet (22) avec une pression comprise entre 0,5 bar ≤ p_{cp1} ≤ 2 bar, de préférence entre 1 bar ≤ p_{cp1} ≤ 1,5 bar.

5. Procédé selon l'une des revendications 1 à 4, **caractérisé en ce que** le temps de frottement t_{f} est compris entre 0,1 s ≤ t_{f} ≤ 2 s, de préférence entre 0,1 s ≤ t_{f} ≤ 1 sec, et très préférablement entre 0,5 s ≤ t_{f} ≤ 1s.

6. Procédé selon l'une des revendications 1 à 5, **caractérisé en ce que** la seconde pression de contact p_{cp2} est exercée sur la face avant de rivet (22) avec une pression comprise entre 0,5 bar ≤ p_{cp2} ≤ 2,5 bar, de préférence entre 1 bar ≤ p_{cp2} ≤ 2 bar.

7. Procédé selon l'une des revendications 1 à 6, **caractérisé en ce que** la seconde pression de contact est exercée sur la face avant de rivet (22) pendant un temps de déformation tᵤ compris entre 1 s ≤ tᵤ ≤ 3 s, de préférence entre 1 s ≤ tᵤ ≤ 2 s.

8. Procédé selon l'une des revendications précédentes, **caractérisé en ce que** le poinçon (12) est déplacé en position initiale après avoir atteint la position finale et après un délai t_{d} compris entre 0,2 s ≤ t_{d} ≤ 1,5 s, de préférence entre 0,2 s ≤ t_{d} ≤ 1,0 s et de manière particulièrement préférée entre 0,2 s ≤ t_{d} ≤ 0,7 s.

9. Utilisation d'un procédé selon l'une des revendications précédentes pour former une tête de rivet (26) d'un rivet (14) qui fixe un couvercle de boîtier (20) par complémentarité de forme sur un boîtier (16) d'un tendeur de découplage pour un générateur de démarrage à courroie.
